# FASCICULE DE BREVET EUROPEEN

(11) **EP 0 891 611 B1**
(45) Date de publication et mention de la délivrance du brevet: **05.07.2006**
(21) Numéro de dépôt: 97915537.1
(22) Date de dépôt: 21.03.1997
(51) Int. Cl.: G07F 7/10, E05B 49/00

(54) **SYSTEME DE CONTROLE D'ACCES A UNE FONCTION, DANS LEQUEL LE CHIFFREMENT IMPLIQUE PLUSIEURS VARIABLES DYNAMIQUES**
ZUGANGSKONTROLLSYSTEM ZU EINER FUNKTION, IN DER DIE CHIFFRIERUNG MEHREREDYNAMISCHE VERÄNDERLICHE ENTHÄLT.
FUNCTION ACCESS CONTROL SYSTEM WITH ENCRYPTION USING A PLURALITY OF DYNAMIC VARIABLES

(30) Priorité: 22.03.1996 US 620240; 17.04.1996 FR 9604798
(43) Date de publication de la demande: 20.01.1999
(73) Titulaire: ACTIVIDENTITY EUROPE SA, 92156 Suresnes Cédex (FR)
(72) Inventeur: AUDEBERT, Yves, Los Gatos 95032 CA (US)
(74) Mandataire: Colas, Jean-Pierre
(86) Numéro de dépôt international: PCT/FR1997/000505
(87) Numéro de publication internationale: WO 1997/036264

(56) Documents cités:
- EP-A- 0 244 332
- EP-A- 0 605 996
- EP-A- 0 698 706
- DE-A- 4 223 258

## Description

La présente invention est relative à un système électronique de contrôle d'accès à une fonction ou d'authentification d'une personne ou d'un message, permettant notamment à un utilisateur d'obtenir conditionnellement un service ou une autre prestation devant être fourni par une unité de service spécialisé associée au système en question.

Plus particulièrement, l'invention concerne un système de contrôle d'accès à un ordinateur ou plus généralement à un réseau informatique dont l'utilisation est réservée à des personnes s'étant dûment légitimées. De tels réseaux peuvent servir par exemple pour assurer toutes sortes de services impliquant une transaction, le plus souvent à contrepartie économique, telle que le télé-achat, la télévision à péage, la banque à domicile, les jeux télévisés interactifs, ou également le fac-similé confidentiel etc.

Un exemple d'un tel système de la technique antérieure est décrit dans le brevet US N° 3 806 874. Ce brevet décrit un système d'identification ou d'authentification de personnes dans lequel un mot de passe est engendré par le chiffrement de données temporelles décimales codées binaires et de deux nombres fixes. Dans ce système, une unité d'identification (ou carte) engendre des premières et secondes séquences de données (mots de passe) en fonction d'un numéro d'identification personnel, de données secrètes et de données temporelles binaires provenant d'une première horloge. Le numéro personnel est transmis à une unité de vérification (ou serveur). L'unité de vérification engendre des premières et secondes séquences de données en chiffrant le numéro d'identification personnelle, les données secrètes et des données temporelles décimales codées binaires provenant d'une seconde horloge. Les données temporelles sont fournies indépendamment par les horloges se trouvant respectivement dans l'unité d'identification et dans l'unité de vérification.

Plus particulièrement, l'unité d'identification 10 comprend une mémoire primaire ROM 12 dans laquelle est stocké un numéro d'identification personnelle, et un circuit secret 20 qui mémorise des données secrètes dans une mémoire secrète 26 qui permet d'engendrer les premières et secondes séquences de données. Les données secrètes sont différentes pour chaque utilisateur et ne lui sont pas connues. Le circuit secret 20 comporte un circuit de chiffrement fournissant les premières et secondes séquences en chiffrant des données d'entrée composées du numéro d'identification personnelle, des données secrètes et des données temporelles décimales codées binaires engendrées par l'horloge 42.

Dans le serveur, un circuit secret 31 correspondant au circuit secret 20 de la carte comporte une mémoire secrète 33 et reçoit une entrée temporelle d'une horloge 53. Le circuit secret 31 reçoit également une entrée (le numéro d'identification personnelle) de la mémoire primaire 12 de l'unité d'identification 10. Le circuit secret 31 comporte un circuit de chiffrement produisant des première et seconde séquences de données (mots de passe) en chiffrant les données d'entrée composées du numéro d'identification personnelle, des données secrètes et des données temporelles décimales codées binaires provenant de l'horloge 53.

Les premières séquences de données sont comparées dans un comparateur 30 de la carte. Si elles sont en concordance, un signal d'acceptation est engendré. Le comparateur compare (1) la première séquence de données obtenue du serveur pendant le même intervalle de temps pendant lequel la première séquence de données a été engendrée dans l'unité de -vérification avec (2) la première séquence de données engendrée pendant le même intervalle de temps dans la carte. En d'autres termes, le comparateur 30 doit recevoir du serveur la première séquence de données pendant le même intervalle de temps pendant lequel elle a été engendrée pour que cette séquence de données reçue soit en concordance avec la première séquence de données engendrée dans l'unité de vérification pendant ce même intervalle de temps. Le même raisonnement s'applique aux secondes séquences de données comparées dans le comparateur 41.

Les circuits secrets 20 et 31 du brevet US n° 3 806 874 engendrent des mots de passe (nombres de vérification) par le chiffrement du numéro d'identification personnelle, des données secrètes et des données temporelles décimales codées binaires afin de produire les premières et secondes séquences de données. Pour que les séquences de données concordent, il faut que les données temporelles utilisées dans l'unité d'identification et dans l'unité de vérification soient identiques. Par conséquent, les horloges 42 et 53 doivent être synchrones pour qu'elles puissent engendrer à peu près en même temps les mêmes données temporelles.

Le brevet US 4 601 011 décrit un système d'authentification qui engendre un mot de passe en chiffrant un nombre fixe avec une clé formée de deux parties dont la première ne change pas et dont la seconde change chaque fois que la clé est utilisée pour le chiffrement.

Ce système comporte au moins une unité portable électronique (carte) et au moins une unité de vérification électronique (serveur) qui doit conditionnellement délivrer des autorisations d'accès à un ordinateur. Le système engendre des mots de passe qui dans une première variante sont fonction du temps et dans une seconde variante fonction du nombre de mots de passe engendrés dans l'unité portable. Celle-ci comporte un module de chiffrement qui chiffre un -mot de passe différent pour chaque transmission en utilisant une clé en deux parties. Le serveur reçoit le mot de passe de la carte et engendre un mot de passe interne par chiffrement d'un nombre fixe (correspondant au nombre fixe chiffré dans la carte)⁻ avec la première partie de la clé (stockée en mémoire) et la seconde partie de la clé (reçue de la carte). Un comparateur 50 compare le mot de passe reçu au mot de passe interne et, en fonction du résultat de la comparaison, délivre une sortie qui accorde ou refuse l'accès à l'ordinateur 56.

Les systèmes des brevets US 4 601 011 et 3 806 874 produisent tous deux des mots de passe identiques ("séquences de donnés" ou "nombres de vérification chiffrés") dans la carte et dans le serveur, les deux unités calculant de façon indépendante les mots de passe en exécutant un programme de chiffrement sur des données comprenant au moins un code personnel fixe et au moins un nombre fonction du temps ou variant en fonction du nombre de fois qu'un mot de passe est engendré dans la carte.

Le brevet US 4 720 860 décrit un autre système d'authentification dans lequel, pour engendrer les mots de passe, on utilise une variable statique et une variable dynamique. Dans ce brevet, au début d'une procédure de demande d'accès, l'utilisateur doit entrer dans la carte un code fixe chaque fois qu'une transaction doit être réalisée. Le code fixe est une variable statique. Une seconde variable est engendrée de manière à varier de façon dynamique en fonction du temps, en particulier en fonction de l'instant auquel le code fixe est introduit dans la carte par l'utilisateur. Les deux variables dont l'une est donc statique et l'autre dynamique, sont alors utilisées comme paramètres d'entrée d'un algorithme secret de chiffrement servant à engendrer un mot de passe dans la carte.

Ce mot de passe est affiché sur la carte et l'utilisateur est invité à le transférer dans le serveur. Le -code fixe est également transféré au serveur qui, en utilisant le même algorithme de chiffrement et une variable dynamique ayant en principe la même valeur que celle utilisée dans la carte, calcule également le mot de passe. Ce dernier est comparé au mot de passe transmis au serveur par l'utilisateur et s'il y a concordance, une autorisation d'accès à la fonction peut être délivrée. Ce système de contrôle d'accès emploie donc une variable statique à l'aide de laquelle l'algorithme de chiffrement calcule le mot de passe tout en utilisant également la variable dynamique.

Dans ce système, la variable statique est stockée dans une mémoire de la carte et transmise au serveur, par exemple par l'intermédiaire d'une ligne téléphonique. Ainsi, elle est susceptible d'être décelée par des pirates utilisant des procédés électroniques frauduleux.

Dans ce système, l'algorithme doit donc nécessairement être maintenu secret afin de préserver la sécurité du système. Si la sécurité de l'algorithme est percée, la sécurité de l'ensemble du système est compromise, car les variables statiques peuvent éventuellement être découvertes par des procédés électroniques frauduleux. C'est ce qui explique que, dans ce brevet, on prévoit des moyens pour détruire l'algorithme en cas de tentative de fraude sur la carte (par exemple en mémorisant l'algorithme dans une mémoire volatile).

On doit également noter que dans les deux brevets US n° 3 806 874 et 4 720 860, la seconde variable est une valeur dynamique fonction du temps. Comme cette variable doit nécessairement être produite indépendamment à la fois dans la carte et dans le serveur, les horloges des deux unités utilisées pour engendrer la variable dynamique de chaque côté doivent être synchronisées avec une précision donnée. Pour ne pas avoir à fournir des horloges trop précises (ce qui augmenterait considérablement le coût du système), il est nécessaire d'admettre une plage de tolérance à -l'intérieur de laquelle le mot de passe actuel reste valable. Plus la plage de tolérance est courte et plus la sécurité est assurée, mais également plus un défaut de synchronisation des horloges est gênant.

Compte tenu de cette plage de tolérance, le mot de passe calculé à chaque demande d'accès est encore valable pendant la durée de chaque intervalle séparant deux opérations de calcul de la variable dynamique. Un tel intervalle peut avoir une durée relativement longue (typiquement 10 minutes voire davantage, par exemple) de sorte qu'un fraudeur s'emparant subrepticement du mot de passe d'une carte au moment d'une demande d'accès, aura le temps de l'utiliser pendant tout l'intervalle précité sur le serveur et pourra ainsi facilement obtenir une autorisation d'accès.

Dans le brevet US n° 4 800 590, on décrit également un système d'authentification utilisant une clé de chiffrement dynamique fonction du temps. Plus particulièrement, ce système utilise comme paramètre d'entrée d'un algorithme de chiffrement, une clé de chiffrement utilisée comme variable dynamique que l'on fait varier en fonction du temps. Ce procédé nécessite une mise à jour périodique de la clé de chiffrement, par exemple à une fréquence donnée d'une minute. Si cette mise à jour peut facilement être mise en oeuvre dans la carte, il n'en va pas de même en ce qui concerne le serveur. En effet, le système peut avoir un très grand nombre d'utilisateurs ayant chacun une carte à laquelle est affectée une variable dynamique évidemment unique pour cette carte. Par conséquent, dans ce système connu du brevet US 4 800 590, le serveur doit périodiquement recalculer par des calculs itératifs, soit toutes les clés de chiffrement à la fois, soit mettre à jour la clé de chiffrement de la carte considérée pendant que celle-ci demande un accès. On comprend que si le système comporte un grand nombre de cartes (typiquement 100 000, par exemple), -la mise à jour des clés de chiffrement devient rapidement une charge de calcul trop importante pour le serveur. Ce brevet décrit également la possibilité de mettre à jour la clé en réponse à une action de l'utilisateur sur une touche; ce mode de réalisation est désavantageux car il limite la fréquence de modification de la clé.

Le brevet US 5 060 263 décrit également un système engendrant un mot de passe dynamique. Dans ce système, un générateur de mots de passe produit chaque mot de passe par le chiffrement du mot de passe engendré auparavant utilisé comme variable. Un grand nombre de clés de chiffrement fixes est stocké dans la carte. Pour augmenter la sécurité, le serveur engendre un nombre aléatoire pour désigner l'une des clés qui sera utilisée pour générer le mot de passe. La carte doit répéter les séquences de chiffrement (au moyen d'un algorithme public du type DES) autant de fois qu'il y a de clés dans la carte, en rebouclant la sortie sur l'entrée.

Dans ce système connu, les clés ont donc des valeurs fixes malgré qu'elles soient choisies aléatoirement. Cependant, elles peuvent être décelées frauduleusement dans la mémoire de la carte. De plus, le nombre aléatoire engendré dans le serveur doit être transmis vers la carte et il peut donc être intercepté frauduleusement pendant la transmission. Un autre problème de ce système se pose si l'utilisateur de la carte n'achève pas une demande d'accès dans le serveur. Dans ce cas, il peut y avoir de sérieux problèmes de désynchronisation, car chaque mot de passe est engendré sur la base du mot de passe précédent, de sorte que le décalage devient de plus en plus important avec le temps. On doit alors prévoir un mécanisme permettant de rétablir la synchronisation.

Le document EP 0 605 996 A1 divulgue un système où un code de sécurité est transmis par un codeur 28 comprenant une partie représentée par valeur du compteur de transmission 22, une partie représentée par un code d'identification 24 et une partie représentée par un « rolling code » 26. Ce code de sécurité est donc la juxtaposition de trois éléments qui sont transmis par le codeur 28 au décodeur 42. Celui-ci les sépare en vue de leur traitement individuel par le récepteur 40.

Deux de ces éléments, la valeur du compteur de transmission 22 et le « rolling code 26 » sont des variables dynamiques mais elles ne servent pas à générer des paramètres d'entrée d'un algorithme de chiffrement produisant un mot de passe.

L'invention a pour but de fournir un système de contrôle d'accès ou d'authentification de personnes et/ou de messages offrant une meilleure sécurité contre les fraudes.

Elle a donc pour objet un système de contrôle d'accès ou d'authentification de personnes et/ou de messages selon la revendication 1.

Les variables dynamiques doivent être cohérentes dans lesdites première et seconde unités; elles doivent donc présenter une relation prédéterminée, comme par exemple l'identité.

Il résulte tout d'abord de ces caractéristiques que les premières unités du système ne contiennent dans leur mémoire pour le calcul du mot de passe aucune variable statique susceptible d'être décelée frauduleusement, par exemple par espionnage. Un autre avantage consiste en ce que l'algorithme de chiffrement n'a pas nécessairement à être secret et s'il en est ainsi, l'on peut se dispenser de moyens de destruction de cet algorithme en cas de fraude.

Il est vrai que si l'on utilise un algorithme publique, au moins l'une des variables dynamiques doit être secrète, mais en cas de découverte frauduleuse d'une telle variable (qui est propre à la carte), seule la carte concernée perd sa sécurité alors que le système lui-même la conserve entièrement.

Ainsi, suivant une autre caractéristique de l'invention, lesdits premiers et seconds moyens générateurs comportent respectivement des troisièmes et quatrièmes moyens de calculs pour engendrer au moins une première desdites variables dynamiques selon une fonction faisant intervenir le nombre de demandes d'accès formulées par ladite première unité antérieurement à la demande d'accès en cours.

Il résulte de cette caractéristique particulièrement avantageuse que, grâce à l'invention, la mise à jour d'une première des variables dynamiques, utilisée par exemple comme clé de chiffrement, n'a pas besoin d'être effectuée périodiquement et ne nécessite dans le serveur aucun recalcul ou "rattrapage" de la valeur de la variable dynamique calculée pour une demande d'accès antérieure, par - rapport à la valeur actuelle de cette variable dynamique calculée se trouvant dans la carte au moment où une demande d'accès est formulée. Le travail de calcul pour le serveur est donc réduit au minimum.

Certes, il peut se produire que le nombre de demandes d'accès comptabilisées par la carte soit supérieur à celui enregistré par le serveur du fait que l'utilisateur de la carte peut ne pas toujours achever une demande d'accès. Cependant, dans ce cas, le serveur n'aura à rattraper au pire qu'un très faible nombre d'itérations pour recalculer la variable dynamique. En outre, on pourra, par construction, limiter d'office l'écart entre les nombres de demandes d'accès comptabilisés respectivement dans les deux unités.

On observera également que, grâce à l'invention, si un individu s'empare frauduleusement d'un mot de passe qui vient d'être obtenu par un utilisateur d'une carte donnée et est transféré légitimement au serveur par celui-ci, ce mot de passe n'aboutira pas à une autorisation d'accès. En effet, une nouvelle demande d'accès, même formulée très rapidement après, engendrera un mot de passe différent de celui qui va être calculé dans le serveur, car la variable dynamique de la carte aura alors évoluée par l'augmentation du nombre de demandes d'accès.

Dans un mode de réalisation particulier, le système de contrôle d'accès peut comprendre des seconds moyens de calcul du mot de passe qui déchiffrent le mot de passe reçu selon au moins un algorithme de déchiffrement utilisant comme clé de déchiffrement un paramètre d'entrée fonction d'une première variable dynamique produite dans ladite seconde unité pour dériver une variable dynamique qui doit correspondre à l'une des variables dynamiques produites dans la première unité. Dans ce cas, cette seconde unité comprend également des moyens comparateurs qui comparent la variable dynamique dérivée par les seconds moyens de calcul, à une seconde desdites variables dynamiques engendrées dans ladite seconde unité, et des moyens qui, lorsque les moyens comparateurs constatent une relation prédéterminée entre la variable dynamique dérivée par les seconds moyens de calcul et la seconde desdites variables engendrée dans la seconde unité, délivrent une autorisation d'accès à ladite fonction.

D'autres caractéristiques et avantages de l'invention apparaîtront au cours de la description qui va suivre, donnée uniquement à titre d'exemple et faite en se référant aux dessins annexés sur lesquels:
- la figure 1 est un schéma général d'un système de contrôle d'accès selon l'invention;
- la figure 2 est un organigramme simplifié illustrant le principe de déroulement des opérations dans le système selon l'invention, lorsqu'une demande d'accès est traitée;
- la figure 3 montre un organigramme du mode de calcul d'une clé de chiffrement utilisée pour le calcul du mot de passe.

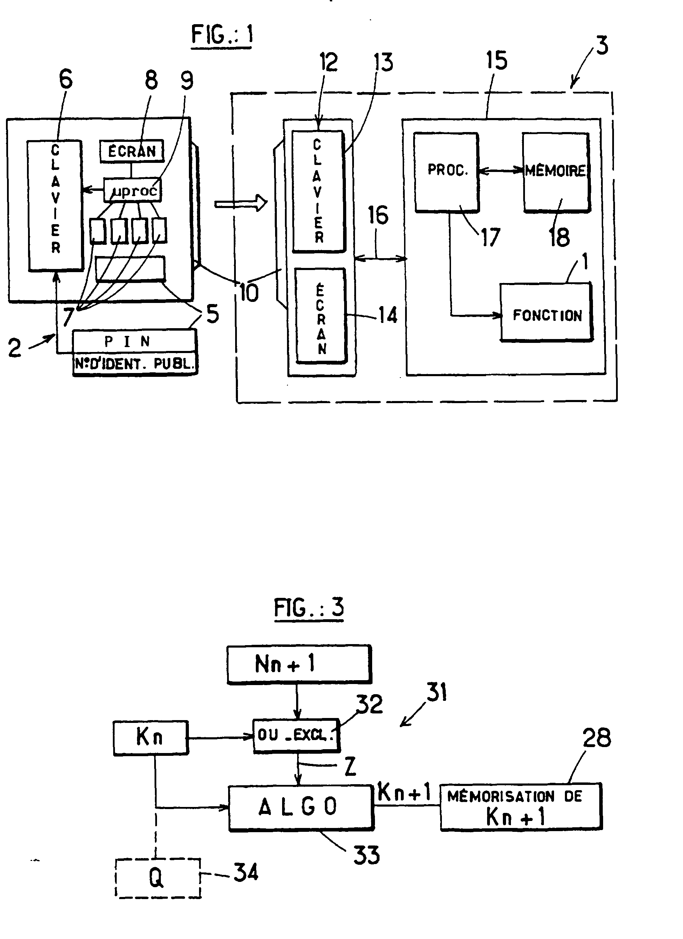

Sur la figure 1, on a représenté un schéma très simplifié d'un système de contrôle d'accès selon l'invention.

Le système est supposé donner un accès conditionnel à une fonction qui est symbolisée par le rectangle 1 sur la figure 1. Le terme "fonction" doit être pris dans une acception très large. Il désigne toute fonction à laquelle l'accès est conditionné par une autorisation faisant intervenir une authentification impliquant une vérification de l'outil (carte) à l'aide duquel la demande est formulée, et de préférence également une identification de la personne demandant l'accès à la fonction pour savoir si sa demande est légitime.

La fonction peut être de toute nature, par exemple une fonction d'accès à un local, à un réseau informatique ou à un ordinateur, à une transaction d'ordre pécuniaire (télé-achat, banque à domicile, jeu télévisé interactif, télévision à péage) etc. Par ailleurs, des fonctions d'authentification, soit de personnes, soit de messages, tombent expressément dans la portée de la présente invention, bien que dans l'ensemble de la description on fasse plutôt référence à une procédure impliquant des demandes d'accès à une fonction.

Ceci étant, on voit sur la figure 1 que selon un mode de réalisation particulier, le système suivant l'invention peut comporter au moins une première unité 2 appelée "carte" et au moins une seconde unité 3. On notera que le système de contrôle d'accès selon l'invention peut comporter un grand nombre de premières unités et une ou plusieurs secondes unités, mais en tout cas en un nombre généralement nettement plus faible. Les nombres d'unités 2 et 3 ne sont donc nullement limitatifs de l'invention.

La première unité ou carte 2 est de préférence portable et personnalisée pour être affectée personnellement à un utilisateur donné. Elle se présente par exemple sous la forme d'une calculette ou d'une carte de crédit et elle porte un numéro d'identification publique 5 indiqué schématiquement sur la figure 1. Ce numéro peut y être inscrit en clair et y être affecté au moment de son initialisation. Il peut également être formé par le nom de l'utilisateur ou par toute autre information propre à celui-ci. Un autre numéro, le numéro d'identification personnelle ou PIN, est secret et normalement connu seulement de l'utilisateur autorisé de la carte. Pour utiliser la carte, le numéro PIN doit y être introduit par l'utilisateur, la carte comparant le numéro PIN introduit à une valeur qui y est mémorisée. Si le numéro PIN introduit et la valeur mémorisée concordent, l'utilisateur reçoit l'autorisation d'utiliser la carte; sinon la carte ne fonctionnera pas pour générer un mot de passe. Quant au numéro d'identification publique, il identifie la carte elle-même vis-à-vis de l'unité 3 parmi toutes les cartes avec lesquelles le système -est appelé à travailler.

La carte 2 comporte un clavier 6 destiné à permettre l'introduction d'informations, telles que par exemple les numéros d'identification déjà mentionnés, ainsi que diverses touches de fonction 7. Elle comporte également un écran d'affichage 8 et est dotée d'un circuit intégré 9 comportant notamment un microcontrôleur dûment programmé ainsi que les mémoires ROM et RAM habituelles.

La carte 2 comporte également un dispositif de communication 10 permettant de communiquer avec l'unité 3, soit directement, soit par une liaison de transmission à plus ou moins longue distance. Ce dispositif peut se présenter sous de nombreux aspects par exemple une liaison téléphonique en DTMF, un dispositif de transmission de données par rayons infrarouges, un dispositif dit "en mode connecté" dans lequel la carte est insérée dans un lecteur approprié ou tout autre dispositif de transmission bien connu dans la technique.

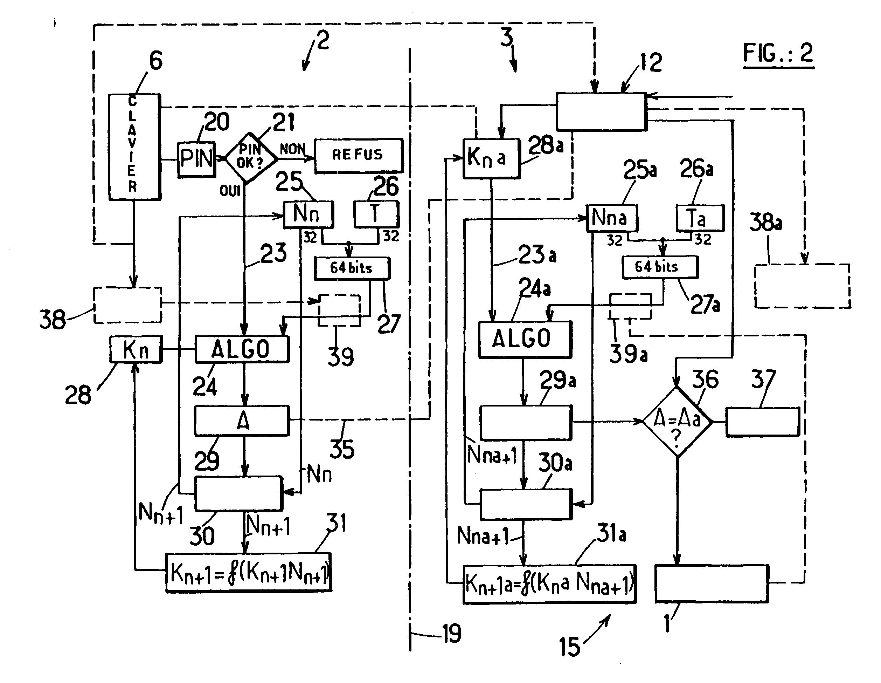

La seconde unité 3 englobe tout d'abord des moyens d'interface permettant d'assurer la communication avec la carte 2 au moyen du dispositif de communication 10. Dans le mode de réalisation représenté sur les figures 1 et 2, ces moyens d'interface sont symbolisés par un rectangle 12; ils peuvent se présenter sous de nombreuses formes. Il peut s'agir par exemple d'un lecteur dédicacé spécialement, mais il peut également se présenter sous la forme d'un terminal d'ordinateur inséré par exemple dans un réseau, ou encore un ordinateur personnel équipé d'une interface à rayons infrarouges, etc. Leur particularité est qu'ils peuvent communiquer sous une forme appropriée avec la ou les cartes qui leur est ou sont associée(s).

Les moyens d'interface 12 peuvent comprendre un clavier 13 et un écran d'affichage 14 pour permettre à un utilisateur d'introduire des informations à communiquer à une partie 15 de la seconde unité 3, telles que par exemple des mots de passe ou des données à authentifier relatives à la fonction 1. Toutefois, l'introduction de ces données peut être réalisée d'autres manières, notamment automatiquement sans intervention manuelle de l'utilisateur, par exemple par la simple introduction de la carte dans l'interface 12 ou par l'un des boutons de fonction 7 provoquant par exemple l'émission de rayons infrarouges modulés.

L'interface 12 communique avec l'autre partie 15 de l'unité 3 appelée "serveur" dans la présente description. Cette communication symbolisée par la connexion 16 peut se faire à courte ou à longue distance par tout moyen approprié. Les informations circulant sur cette connexion sont notamment le mot de passe à contrôler dans le serveur 15 et éventuellement des données à authentifier et à exploiter dans le serveur.

Le serveur 15 comporte en particulier un processeur 17 et une mémoire 18. Le processeur est capable de libérer conditionnellement les fonctions 1, visées par les demandes d'accès formulées par les diverses cartes, ces fonctions pouvant être assurées à l'intérieur ou à l'extérieur. A noter que le serveur coopère généralement avec un grand nombre de cartes par l'intermédiaire d'interfaces telles que l'interface 12.

La figure 2 représente un organigramme simplifié des diverses opérations qui se déroulent lorsqu'une demande d'accès à une fonction est formulée par l'utilisateur d'une carte. La figure 2 est divisée en deux parties, la partie à gauche du trait en pointillés 19 représentant les opérations exécutées dans la carte 2 et la partie à droite de ce trait montrant celles qui se déroulent dans la partie 15 ou serveur de l'unité 3.

Pour initier la procédure, le numéro d'identification publique 5 doit être communiqué au serveur 15. Cette opération peut être réalisée de diverses manières. Par exemple, il peut être communiqué directement au serveur dès lors que la carte est insérée dans l'interface 12. Il peut être directement tapé sur le clavier 13 de celui-ci par l'utilisateur lui-même, ou bien sur le clavier 6 de la carte 2 et transféré par le dispositif de communication 10. La communication peut également se faire par une liaison à distance, telle qu'une ligne téléphonique ou par voie hertzienne.

L'utilisateur doit également donner sa légitimation en tapant en 20 son code d'identification personnelle ou code PIN stocké en mémoire de la carte. En cas de non-concordance, la demande d'accès est d'emblée refusée en 22, l'utilisateur pouvant se voir allouer éventuellement plusieurs tentatives consécutives avant qu'un refus définitif lui soit opposé, si elles restent toutes infructueuses.

Si au contraire le code PIN introduit et le code PIN mémorisé concordent, le programme déclenche en 23 l'opération de calcul du mot de passe.

Ce calcul consiste en un chiffrement à l'aide d'un algorithme de chiffrement qui peut être secret ou publique (bloc 24). Dans ce dernier cas, il peut s'agir d'un algorithme appelé DES (Data Encryption Standard) par les spécialistes de cette technique.

Selon l'invention, l'algorithme en question utilise des paramètres d'entrée fonction de variables dynamiques qui, dans le cas représenté, sont au nombre de trois. Deux d'entre elles sont une variable Nn stockée dans un registre 25 et qui représente le nombre de demandes d'accès effectuées par la carte, et une variable T qui est constituée par la position actuelle d'un compteur 26. Lorsque chaque carte est initialisée, ces variables peuvent être fixées à des valeurs initiales, N0 et/ou T0 respectivement qui ne sont pas nécessairement égales à zéro et qui peuvent être secrètes ou publiques. De même, Nn et T peuvent varier selon des fonctions faisant intervenir des paramètres tels qu'entre autres le nombre de demandes d'accès, une fonction du nombre de demandes d'accès et le temps actuel.

Chacune des deux variables Nn et Tn peut comporter 32 bits et préalablement être soumise à une opération de concaténation en 27 offrant ainsi un paramètre d'entrée de 64 bits au total. L'opération en 27 effectuée sur les variables Nn et Tn peut également être constituée par tout autre traitement ou combinaison comme l'entrelaçage, le hachage, une opération OU-EXCLUSIF ou ET etc. En d'autres termes, l'opération en 27 n'est pas limitée à ces diverses variantes, mais elle peut consister en toute opération exécutée dans le but de produire une sortie (sur 64 bits) par combinaison ou traitement de Nn et Tn.

La troisième variable dynamique est une clé de chiffrement Kn utilisée par l'algorithme en 24 pour chiffrer le paramètre d'entrée issu de l'opération de concaténation en 27. La clé de chiffrement Kn est mémorisée dans un registre 28 et elle est mise à jour à chaque demande d'accès, comme expliqué plus loin. Selon des variantes, l'algorithme mis en oeuvre en 24 peut calculer un mot de passe en fonction des valeurs actuelles de Nn, Tn et Kn, ou Kn peut être chiffré selon une clé comprenant une valeur produite par la concaténation de Nn et Tn en 27.

Le chiffrement effectué en 24 donne lieu à la production d'un mot de passe A en 29 et à l'incrémentation d'une unité en 30 de la position du registre 25 de demandes d'accès qui mémorise Nn. Le nombre incrémenté Nn+1 est stocké dans le registre 25 et soumis à une opération de calcul en 31 destinée à élaborer la nouvelle valeur Kn+1 de la troisième variable dynamique ou clé de chiffrement secrète. En variante, la sortie du bloc 30 peut provoquer l'incrémentation du registre 25 par une valeur différente de l'unité, par exemple on peut l'incrémenter de deux unités à la fois (ou de toute autre valeur). De même, le nombre d'unités d'incrémentation peut varier d'une demande d'accès à la suivante. Bien entendu, l'incrémentation doit alors être synchronisée avec celle mise en oeuvre dans le serveur 15.

Un exemple des opérations pouvant être effectuées pour le calcul de la nouvelle valeur de Kn est représenté sur la figure 3. Ces opérations sont effectuées de concert aussi bien dans la carte 2 que dans le serveur 15. Les valeurs Nn+1 et Kn sont soumises en 32 à une opération de combinaison logique, par exemple une combinaison OU-EXCLUSIF. La variable intermédiaire résultante Z est soumise à un chiffrement en 33 à l'aide d'un algorithme connu ou publique qui peut éventuellement être le même que celui utilisé en 24. Le chiffrement peut être effectué à l'aide d'une clé de chiffrement qui est de préférence la valeur de la variable dynamique actuelle Kn, bien qu'une autre clé secrète Q quelconque (bloc 34) puisse également être utilisée.

Le résultat de l'opération de chiffrement en 33 est la nouvelle valeur Kn+1 de la clé de chiffrement qui va être utilisée lors de la prochaine demande d'accès. Cette valeur est mémorisée dans le registre 26.

Après obtention du mot de passe A qui est affiché sur l'écran 8 de la carte, l'utilisateur est invité à le communiquer à l'unité 3. Il est à noter que ce mot de passe peut être le résultat complet de l'opération de chiffrement en 24 (d'une longueur de 64 bits) ou bien seulement une partie de ce résultat, par exemple un mot de 32 bits. Cette communication (symbolisée par le trait en pointillées 35) peut se faire par exemple en tapant le mot sur le clavier 13 de l'interface 12. Cette communication peut également être réalisée automatiquement par le biais du dispositif de communication 10 ou par tout autre moyen de communication approprié, comme décrit ci-dessus.

Lors de l'introduction dans l'unité 3 du numéro d'identification publique 5, le programme du serveur 15 exécute, de concert avec la carte et à l'aide de variables dynamiques engendrées indépendamment par rapport à la carte 2, des opérations de calcul identiques à celles exécutées dans celle-ci. Ces opérations ont donc été indiquées sur la figure 2 par les mêmes références numériques suivies de la lettre "a", comme le sont les registres et le compteur servant à engendrer les variables dynamiques Nna, Ta et Kna. La variable Kna est extraite de la mémoire 18 du serveur 15 en réponse à la demande d'accès, par exemple par transfert du numéro d'identification 5 vers l'interface 12. La mémoire 18 stocke les variables Kna de toutes les cartes avec lesquelles le serveur est appelé à coopérer.

Par conséquent, le serveur 15 engendre de son côté et sans que lui soient communiquées les variables dynamiques engendrées dans la carte 2, un mot de passe Aa qui va être comparé au mot de passe A communiqué au serveur 15 par l'utilisateur. Si la carte est authentique, les mots de passe A et Aa doivent être identiques ou du moins concorder selon des règles prédéterminées. Si le test en 36 aboutit à une réponse affirmative, la fonction en 1 est libérée. Dans le cas contraire, l'accès sera refusé en 37.

On doit noter que dans un système selon l'invention, certains problèmes peuvent se poser lorsque l'une des variables est le temps ou est une fonction du temps, comme décrit ci-dessus, car la dérive des horloges utilisées tant dans la carte que dans le serveur ne peut être évitée. Une solution avantageuse de ces problèmes est décrite dans la demande de brevet déposée ce jour au nom de la demanderesse de la présente demande et intitulée "Système de contrôle d'accès à une fonction comportant un dispositif de synchronisation d'horloges".

On constate donc que, selon l'invention, le processus d'authentification de la carte conduisant à la libération de la fonction en 1 est réalisé à l'aide d'au moins deux variables dynamiques dont l'une est la clé de chiffrement Kn (Kna) et dont l'autre peut être soit le nombre Nn (Nna) de demandes d'accès déjà effectuées, soit le temps T (Ta), soit encore des nombres calculés selon une fonction prédéterminée de ces variables. Comme décrit ci-dessus, trois variables peuvent être utilisées telles que Kn (Kna), Nn (Nna) et T (Ta), les variables Nn (Nna) et T (Ta) étant combinées par exemple par une opération de concaténation.

La clé de chiffrement Kn (Kna) elle-même dérive d'une demande d'accès à l'autre et elle est dynamiquement variable en fonction de la valeur Nn (Nna) avec laquelle elle peut être combinée logiquement, puis chiffrée pour donner lieu à la clé de chiffrement Kn+1 (Kna+1) utilisée lors de la prochaine demande d'accès.

Suivant une variante de l'invention, on peut envisager un transfert de données de la carte 2 vers l'unité 3 et le serveur 15, afin que les données puissent être traitées lors de l'accomplissement de la fonction 1 dans la mesure naturellement où l'autorisation a été donnée pour cela à la suite du test en 36.

L'utilisateur en formulant sa demande d'accès introduit en 38 les données dans la carte à l'aide de son clavier 6. Ces données sont combinées logiquement en 39 avec la valeur concaténée des deux variables Nn et T, le résultat étant utilisé comme paramètre d'entrée de la procédure de chiffrement effectuée en 24. En variante, les données peuvent également directement être combinées avec le résultat de l'opération de chiffrement en 24. Il est essentiel que l'entrée pour l'opération 24 soit une fonction des données à transférer.

Les données sont également transférées au serveur 15 par exemple au moyen du clavier 13 de l'interface 12 ou automatiquement par l'intermédiaire des liaisons 10 et 16.

Les données ainsi reçues en 38a dans le serveur y sont traitées de la même façon que dans la carte 2. En effet, les données peuvent être combinées par une opération logique en 39a avec la valeur concaténée de Nn et de T, le résultat étant utilisé comme paramètre d'entrée pour le processus de chiffrement en 24a. En variante, les données peuvent directement être combinées avec le résultat de l'opération de chiffrement en 24a ou bien les données peuvent constituer une autre clé pour l'opération de calcul en 24a. Les données sont aussi communiquées en clair au dispositif chargé d'exécuter la fonction 1.

Ainsi, l'authenticité des données peut être vérifiée par comparaison des mots de passe A et Aa qui sont tous deux des fonctions de la valeur représentant les données. La mise en oeuvre de la fonction 1 recevra donc également un refus s'il y a non-concordance entre les données présentées des deux côtés.

Plusieurs autres modes de réalisation seront maintenant décrits, certains d'entre eux l'étant en faisant référence à des changements se produisant dans la carte 2, mais on comprendra que ces mêmes changements s'appliquent également au serveur 15, car la carte 2 et le serveur 15 doivent pouvoir engendrer des mots de passe identiques ou concordants.

L'opération 31 illustrée sur les figures 1 et 3 peut varier en fonction de T. De même, l'algorithme 33 peut être changé à chaque nouvelle dérivation de Kn, comme peut l'être l'algorithme utilisé pour le calcul en 24. Par exemple, les modules 24, 24a et 33, 33a peuvent stocker plusieurs algorithmes utilisés distinctement au cours des différentes opérations de calcul des mots de passe. Des changements synchronisés doivent alors être réalisés dans le serveur en ce qui concerne la fonction en 31a, et les algorithmes en 24a et 33a.

De plus, la fonction 32 (Figure 3) peut être différente d'une fonction OU-EXCLUSIF, telle qu'une opération ET ou toute autre opération logique. La fonction 32 n'est pas indispensable, Nn+1 pouvant directement être utilisé par l'algorithme en 33 de façon à être chiffré par Kn ou Q. D'ailleurs, Q peut être soumis avec Nn+1 à une opération OU-EXCLUSIF en 32, Kn ou Q étant utilisé comme clé de chiffrement pour le chiffrement de la sortie produite par l'opération logique en 32.

Un autre mode de réalisation consiste à prévoir une porte ET entre les modules 29 et 30 de la figure 1, la sortie du module 29 constituant l'une des entrées de cette porte ET, l'autre entrée en étant formée par un signal provenant du serveur 15 et qui n'est engendré que si le module 29a engendre une sortie. Ce signal du serveur 15 peut être un type quelconque de signal de communication transitant par une ligne téléphonique ou en modulation sur des rayons infrarouges. De cette manière, le module 25 dans la carte 2 et le module 25a dans le serveur 15 seront incrémentés de façon synchrone. Il n'y aura alors aucune perte de synchronisation des valeurs Nn et Nna. Cependant, dans certaines applications de la présente invention, une telle communication en retour du serveur vers la carte peut ne pas être souhaitable.

Une autre variante consiste à stocker les données en 38 dans la mémoire de la carte. Par exemple, si la carte 2 est une carte bancaire, les données en 38 pourraient être la situation d'un compte bancaire, un numéro de compte etc.

La dérivation de Kn selon les fonctions 31 et 31a peut également être exécutée comme suit. Kn peut être dérivé deux fois pour chaque calcul du mot de passe. On peut le faire par exemple avant et après le calcul du mot de passe. Kn peut également être redérivé en parallèle avec le calcul du mot de passe. En d'autres termes, Kn peut être redérivé pendant le calcul du mot de passe, les sorties du module 24 et du module 24a étant alors directement utilisées comme entrées des modules 33 et 33a, respectivement.

En variante, les valeurs Nn et T peuvent être directement introduites dans le module 24. Les données peuvent être combinées logiquement directement avec Nn ou T ou encore les données peuvent être scindées en deux parties respectivement combinées avec Nn ou T.

## Revendications

1. Système de contrôle d'accès ou d'authentification de personnes et/ou de messages par lequel au moins un utilisateur peut être autorisé à accéder à une fonction d'accès ou d'authentification de personnes et/ou de messages, comprenant au moins une première unité personnalisée (2) pour ledit utilisateur et au moins une seconde unité de vérification (3) commandant l'accès à la fonction;
• ladite première unité (2) comprenant :
des premiers moyens générateurs (25, 26, 31) pour engendrer au moins deux variables dynamiques (Nn, T) ;
des premiers moyens de calcul (24) pour engendrer un premier mot de passe (A) à l'aide d'au moins un premier algorithme de chiffrement utilisant des paramètres d'entrée fonction des variables dynamiques générées dans la première unité; et
des moyens (10, 12, 35) pour transmettre ledit premier mot de passe à la seconde unité (3) ;
• ladite seconde unité (3) comprenant :
des seconds moyens générateurs (25a, 26a, 31a) pour, en réponse à une demande d'accès faite à l'aide d'une déterminée desdites premières unités, engendrer au moins deux variables dynamiques (Nna, Ta) assignées à cette même première unité déterminée ;
des seconds moyens de calcul (24a) pour engendrer un second mot de passe (Aa) à l'aide d'au moins un second algorithme de chiffrement utilisant des paramètres d'entrée fonction des variables dynamiques (Nna, Ta) générées dans la seconde unité ;
des moyens (36) pour comparer les premier et second mots de passe ;
des moyens pour, s'il y a une cohérence prédéterminée entre les mots de passe, délivrer une autorisation d'accès à ladite fonction (1),
**caractérisé en ce que** dans chacune desdites unités:
• lesdits premier et second algorithmes de chiffrement sont des algorithmes publics et l'une au moins desdites variables dynamiques est secrète,
• l'une au moins desdites variables dynamiques est indépendante du temps, et
• lesdits premiers et seconds moyens générateurs (25, 26, 31, 25a, 26a, 31a) sont agencés pour engendrer leurs variables dynamiques de concert, mais de façon indépendante.

2. Système de contrôle suivant la revendication 1, **caractérisé en ce que** lesdits premiers et seconds moyens générateurs (25, 26, 31, 25a, 26a, 31a) comportent respectivement des troisièmes et quatrièmes moyens de calcul (33) pour engendrer au moins une première desdites variables dynamiques (Kn, Kna) selon une fonction impliquant un nombre de demandes d'accès formulées par ladite première unité (2) avant la demande d'accès en cours.

3. Système de contrôle suivant la revendication 2, **caractérisé en ce que** lesdits troisièmes et quatrièmes moyens de calcul (33) engendrent respectivement une variable dynamique intermédiaire (Z) par combinaison logique dudit nombre de demandes d'accès formulées auparavant et la valeur actuelle de ladite première variable dynamique (Kn, Kna).

4. Système de contrôle suivant la revendication 3, **caractérisé en ce que** lesdits troisièmes et quatrièmes moyens de calcul (33) réalisent respectivement, au moyen de troisième et quatrième algorithmes, un chiffrement de ladite variable dynamique intermédiaire (Z), le résultat de ce chiffrement constituant une nouvelle valeur (Kn+1, Kna+1) de ladite première variable dynamique.

5. Système de contrôle suivant la revendication 4, **caractérisé en ce que** lesdits troisièmes et quatrièmes moyens de calcul (33) comprennent respectivement des moyens pour chiffrer ladite variable dynamique intermédiaire (Z) en utilisant ladite première variable (Kn, Kna) comme clé de chiffrement secrète pour lesdits troisième et quatrième algorithmes.

6. Système de contrôle suivant la revendication 4, **caractérisé en ce que** lesdits troisièmes et quatrièmes moyens de calcul (33) comprennent respectivement des moyens pour chiffrer ladite variable dynamique intermédiaire avec une clé de chiffrement (Q) qui diffère de ladite première variable dynamique et qui est utilisée pour lesdits troisième et quatrième algorithmes, respectivement.

7. Système de contrôle suivant la revendication 4, **caractérisé en ce que** lesdits troisièmes et quatrièmes moyens de calcul (33) transfèrent le résultat dudit chiffrement par lesdits troisième et quatrième algorithmes de chiffrement auxdits premiers et seconds moyens de calcul (24, 24a) respectivement, en tant que clé de chiffrement pour lesdits premier et second algorithmes.

8. Système de contrôle suivant l'une quelconque des revendications 2 à 7, **caractérisé en ce que** lesdits premiers et seconds moyens générateurs (25, 25a) engendrent respectivement une seconde desdites variables dynamiques en fonction dudit nombre de demandes d'accès formulées (Nn, Nna) et transfèrent ladite seconde variable dynamique auxdits premiers et seconds moyens de calcul (24, 24a) respectivement, et **en ce que** lesdits premiers et seconds moyens de calcul (24, 24a) chiffrent une donnée d'entrée comprenant ladite seconde variable dynamique respectivement, à l'aide desdits premier et second algorithmes de chiffrement.

9. Système de contrôle suivant la revendication 8, **caractérisé en ce que** lesdits premiers et seconds moyens générateurs (26, 26a) engendrent respectivement une troisième desdites variables dynamiques en fonction du temps actuel (T, Ta) et transfèrent ladite troisième variable dynamique auxdits premiers et seconds moyens de calcul (24, 24a) respectivement, et **en ce que** lesdits premiers et seconds moyens de calcul (24, 24a) incorporent respectivement ladite troisième variable dynamique (T, Ta) dans ladite donnée d'entrée.

10. Système de contrôle suivant la revendication 9, **caractérisé en ce que** lesdits premiers et seconds moyens de calcul (24, 24a) exécutent respectivement une concaténation de ladite troisième variable et de ladite donnée d'entrée.

11. Système de contrôle suivant l'une quelconque des revendications 4 à 10, **caractérisé en ce que** lesdits troisième et quatrième algorithmes de chiffrement sont identiques auxdits premier et second algorithmes de chiffrement.

12. Système de contrôle suivant l'une quelconque des revendications 1 à 11, **caractérisé en ce que** lesdits premiers et seconds moyens générateurs (25, 25a, 26, 26a, 31, 31a) transfèrent respectivement une première desdites variables dynamiques (Kn, Kna) auxdits premiers et seconds moyens de calcul (24, 24a) en tant que clé de chiffrement pour lesdits premier et second algorithmes et engendrent une donnée d'entrée (Nn, Nna) comprenant une seconde desdites variables représentant le nombre de demandes d'accès formulées par ladite première unité avant la demande d'accès en cours, ladite donnée d'entrée étant transférée auxdits premiers et seconds moyens de calcul (24, 24a) respectivement pour y être chiffrée.par ladite première variable dynamique.

13. Système de contrôle suivant la revendication 12, **caractérisé en ce que** lesdits premiers et seconds moyens générateurs (25, 26, 31, 25a, 26a, 31a) comprennent respectivement des troisièmes et quatrièmes moyens de calcul pour engendrer une clé de chiffrement (Kn, Kna) en fonction du nombre de demandes d'accès formulées.

14. Système de contrôle suivant la revendication 13, **caractérisé en ce que** lesdits troisièmes et quatrièmes moyens de calcul (33) comprennent respectivement des moyens de mémoire (28) et engendrent, à partir de la valeur actuelle (Kn, Kna) de ladite clé de chiffrement, une nouvelle valeur (Kn+1, Kna+1) de celle-ci et mémorisent ladite nouvelle valeur dans lesdits moyens de mémoire (28) à la place de ladite valeur actuelle.

15. Système de contrôle suivant l'une quelconque des revendications précédentes, **caractérisé en ce que** ladite première unité (2) comprend des moyens (6, 38) pour mémoriser des données destinées à être transférées à ladite seconde unité (3) afin de pouvoir être utilisées pour mettre en oeuvre ladite fonction, **en ce que** ladite seconde unité (3) comprend des moyens (12, 38) pour recevoir lesdites données et **en ce que** lesdits premiers et seconds moyens générateurs comprennent des moyens (39) pour transférer lesdites données respectivement auxdits premiers et seconds moyens de calcul (24, 24a) afin qu'elles puissent être utilisées comme une composante d'au moins l'une desdites variables dynamiques à chiffrer.

16. Système selon l'une quelconque des revendications 1 à 15, **caractérisé en ce que** ladite première unité (2) se présente sous la forme d'un dispositif électronique portable.

17. Système de contrôle suivant la revendication 16, **caractérisé en ce qu'**il comprend des moyens de communication (10) dans lesdites première et seconde unités, lesdits moyens de communication comprenant une liaison téléphonique du type DTMF et/ou une liaison fonctionnant par rayons infrarouges.

18. Système de contrôle suivant l'une quelconque des revendications 1 à 15, **caractérisé en ce qu'**il comprend un lecteur de cartes prévu dans ladite seconde unité (3) et **en ce que** ladite première unité (2) se présente sous la forme d'une carte pouvant être lue par ledit lecteur de manière à permettre l'échange d'informations entre ladite première unité (2) et ladite seconde unité (3).

19. Système de contrôle suivant l'une quelconque des revendications 1 à 18, **caractérisé en ce que** ladite relation prédéterminée entre les mots de passe est l'égalité.

20. Système de contrôle suivant la revendication 9, **caractérisé en ce que** lesdits premiers et seconds moyens de calcul (24, 24a) assurent respectivement le traitement desdites seconde et troisième variables (Nn, T, Nna, Ta) pour engendrer ladite donnée d'entrée.

21. Système de contrôle suivant l'une quelconque des revendications 1 à 10, **caractérisé en ce que** lesdits premier et second algorithmes de chiffrement sont différents, mais présentent une relation prédéterminée qui se reflète dans la relation entre lesdits premier et second mots de passe (A, Aa).

22. Système de contrôle d'accès ou d'authentification de personnes et/ou de messages par lequel notamment, au moins un utilisateur peut être autorisé à accéder à une fonction d'accès ou d'authentification de personnes et/ou de messages, comprenant au moins une première unité personnalisée pour ledit utilisateur et au moins une seconde unité de vérification commandant l'accès à la fonction,
ladite première unité comprenant :
des premiers moyens générateurs pour engendrer au moins deux variables dynamiques ;
des premiers moyens de calcul pour engendrer un mot de passe à l'aide d'au moins un algorithme de chiffrement utilisant des paramètres d'entrée fonction des variables ; et
des moyens pour transmettre ledit mot de passe à la seconde unité ;
ladite seconde unité comprenant :
des seconds moyens générateurs pour, en réponse à une demande d'accès faite à l'aide d'une déterminée desdites premières unités, engendrer au moins deux variables dynamiques assignées à cette même première unité déterminée ;
des seconds moyens de calcul pour déchiffrer ledit mot de passe à l'aide d'au moins un algorithme de déchiffrement utilisant en tant que clé de déchiffrement un paramètre d'entrée fonction d'une première desdites variables dynamiques générées dans la seconde unité pour dériver une variable dynamique qui doit corresponre à l'une des variables dynamiques engendrées dans ladite première unité;
des moyens de comparaison pour comparer ladite variable dynamique dérivée par lesdits seconds moyens de calcul avec une seconde desdites variables dynamiques engendrées dans ladite seconde unité ;
des moyens qui, lorsque lesdits moyens de comparaison constatent qu'il existe une relation prédéterminée entre ladite variable dynamique dérivée par lesdits seconds moyens de calcul avec ladite seconde variable dynamique parmi lesdites variables dynamiques engendrées dans ladite seconde unité, délivrent une autorisation d'accès à ladite fonction ;
**caractérisé en ce que**
lesdits premiers et seconds moyens générateurs prévus respectivement dans lesdites première et seconde unités sont configurés de manière à fournir lesdites variables dynamiques de concert, mais de façon indépendante.

## Claims

1. An access control system for control of access or for authentication of individuals and/or messages by which at least one user may be granted access to an access function or an authentication of individuals and/or messages function, said system including at least one first unit (2) personalized for said user and at least one second verification unit (3) controlling access to the function,
* said first unit (2) comprising:
- first generator means (25, 26, 31) for producing at least two dynamic variables (Nn, T) ;
- first calculation means (24) for producing a first password (A) in accordance with at least one first encryption algorithm using input parameters dependent on the dynamic variables generated in the first unit; and
- means (10, 12, 35) for transmitting said first password to said second unit (3);
* said second unit (3) comprising:
- second generator means (25a, 26a, 31a) for, in response to an access request made by way of a specified one of said at least one first unit, producing at least two dynamic variables (Nna, Ta) assigned to said specified one first unit;
- second calculation means (24a) for producing a second password (Aa) in accordance with at least one second encryption algorithm using input parameters dependent on said variables (Nna, Ta) produced in said second unit;
- comparator means (36) for comparing said first and second passwords;
- means, responsive to a predetermined consistency between said passwords, for delivering an authorization of access to said function (1),
**characterized in that**, in each of said units:
• said first and second encryption algorithms are public algorithms and at least one of said dynamic variables is secret;
• at least one of said dynamic variables is independent from time, and
• said first and second generator means (25, 26, 31, 25a, 26a, 31a) are so arranged as to produce their dynamic variables generated in concert, but independently.

2. The control system as claimed in claim 1, wherein said first and second generator means (25, 26, 31, 25a, 26a, 31a) respectively include third and fourth calculation means (33) for producing at least a first one of said dynamic variables (Kn, Kna) according to a function involving a number of access requests made by said first unit (2) prior to the current access request in progress.

3. The control system as claimed in claim 2, wherein said third and fourth calculation means (33) respectively generate an intermediate dynamic (Z) variable by logical combination of said number of access requests made and the current value of said first dynamic variable (Kn, Kna).

4. The control system as claimed in claim 3, wherein said third and fourth calculation means (33) respectively perform, by means of third and fourth algorithms, an encryption of said intermediate dynamic variable (Z), the result of this encryption constituting a new value (Kn + 1, Kna + 1) of said first dynamic variable.

5. The control system as claimed in claim 4, wherein said third and fourth calculation means (33) respectively comprise means for encrypting said intermediate dynamic variable (Z) with said first dynamic variable (Kn, Kna) used as a secret encryption key in respect of said third and fourth algorithms.

6. The control system as claimed in claim 4, wherein said third and fourth calculation means (33) respectively comprise means for encrypting said intermediate dynamic variable with an encryption key (Q) which differs from said first dynamic variable and is used in respect of said third and fourth encryption algorithms respectively.

7. The control system as claimed in claim 4, wherein said third calculation means and said fourth calculation means (33) transfer the result of said encryption by said third and fourth encryption algorithms to said first and second calculation means (24, 24a) respectively as an encryption key in respect of said first and second algorithms.

8. The control system as claimed in any of claims 2 to 7, wherein said first and second generator means (25, 25a) respectively generate a second one of said dynamic variables as a function of said number (Nn, Nna) of access requests made and transfer said second dynamic variable to said first and second calculation means (24, 24a) respectively, and wherein said first and second calculation means (24, 24a) encrypt an input datum comprising said second dynamic variable, in accordance with said first and second encryption algorithms respectively.

9. The control system as claimed in claim 8, wherein said first and second generator means (26, 26a) respectively generate a third one of said dynamic variables as a function of current time (T, Ta) and transfer said third dynamic variable to said first and second calculation means (24, 24a) respectively and wherein said first and second calculation means (24, 24a) respectively incorporate said third dynamic variable (T, Ta) in said input datum.

10. The control system as claimed in claim 9, wherein said first and second calculation means (24, 24a) respectively perform a concatenation of said third dynamic variable and of said input datum.

11. The control system as claimed in any of claims 4 to 10, wherein said third and fourth encryption algorithms are identical to said first and second encryption algorithms.

12. The control system as claimed in any of claims 1 to 11, wherein said first and second generator means (25, 25a, 26, 26a, 31, 31a) respectively transfer a first one of said dynamic variables (Kn, Kna) to said first and second calculation means (24, 24a) as an encryption key in respect of said first and second algorithms and produce an input datum (Nn, Nna) comprising a second one of said variables consisting of the number of access requests made by said first unit prior to the current access request in progress, said input datum being transferred to said first and second calculation means (24, 24a) respectively so as to be encrypted therein by said first dynamic variable.

13. The control system as claimed in claim 12, wherein said first and second generator means (25, 26, 31, 25a, 26a, 31a) respectively comprise third and fourth calculation means for producing an encryption key (Kn, Kna) as a function of the number of access requests made.

14. The control system as claimed in claim 13, wherein said third and fourth calculation means (33) respectively comprise memory storage means (28) and generate, from the current value (Kn, Kna) of said encryption key, a new value (Kn + 1, Kna + 1) of said encryption key and store said new value in said memory storage means (28) as replacement for said current value.

15. The control system as claimed in any of the preceding claims, wherein said first unit (2) comprises means (6, 38) for storing data intended to be transferred to said second unit (3) so as to be used in accomplishing said function and said second unit (3) comprises means (12, 38) for receiving said data, and wherein said first and second generator means comprise means (39) for transferring said data respectively to said first and second calculation means (24, 24a) so as to serve as a component of at least one of said dynamic variables to be encrypted.

16. System according to any of claims 1 to 15, wherein said first unit (2) is a portable electronics device.

17. The control system as claimed in claim 16, comprising communication means (10) in said first and second units, said communication means comprising a DTMF telephone link and/or an infrared communication device.

18. The control system as claimed in any of claims 1 to 15, comprising a card reader in said second unit (3), said first unit (2) comprising a card adapted for being read by said card reader so as to communicate information between said first unit (2) and said second unit (3).

19. The control system as claimed in any of claims 1 to 18, wherein said predetermined relationship between said passwords is equality.

20. The control system as in claim 9, wherein said first and second calculation means (24, 24a) respectively process said second and third dynamic variables (Nn, T, Nna, Ta) to produce said input datum.

21. The control system as claimed in any of claims 1 to 10, wherein said first and second encryption algorithms are different from one another but have a predetermined relationship with one another such that said first password and said second password (A, Aa) have also a predetermined relationship.

22. An access control system for control of access or for authentication of individuals and/or messages by which, in particular, at least one user may be granted access to an access function or an authentication of individuals and/or messages function, said system including at least one first unit personalized for said user and at least one second verification unit controlling access to said function,
* said first unit comprising:
- first generator means for producing at least two dynamic variables;
- first calculation means for producing a password in accordance with at least one encryption algorithm using input parameters dependent on said variables; and
- means for transmitting said password to said second unit;
* said second unit comprising:
- second generator means for, in response to an access request made by way of a specified one of said at least one first unit, producing at least two dynamic variables assigned to said specified one of said at least one first unit;
- second calculation means for decrypting said password in accordance with at least one decryption algorithm using as a decryption key an input parameter dependent on a first one of said dynamic variables produced in said second unit to derive a dynamic variable which must correspond to one of the dynamic variables produced in said first unit;
- comparator means for comparing said dynamic variable derived by said second calculation means with a second one of said dynamic variables produced in said second unit; and
- means, responsive to said comparator means determining that a predetermined relationship exists between said dynamic variable derived by said second calculation means with said second one of said dynamic variables produced in said second unit, for delivering an authorization of access to said function;
**characterized in that** said first and second generator means provided respectively in said first and second units are so arranged as to produce said at least two dynamic variables in concert, but independently.

## Patentansprüche

1. System zur Zugangskontrolle oder zur Authentifizierung von Personen und/oder von Nachrichten, durch welches wenigstens einem Anwender erlaubt werden kann, Zugriff auf eine Zugangsfunktion oder Funktion zur Authentifizierung von Personen und/oder Nachrichten zu haben, mit wenigstens einer ersten, für den Anwender personalisierten Einheit (2) und wenigstens einer zweiten Einheit zur Verifizierung (3), die den Zugang zu der Funktion steuern,
• wobei die erste Einheit (2) umfasst:
erste Generatormittel (25, 26, 31), um wenigstens zwei dynamische Variablen (Nn, T) zu erzeugen;
erste Rechenmittel (24), um ein erstes Passwort (A) mit Hilfe wenigstens eines ersten Chiffrieralgorithmus unter Verwendung von Eingangsparametern in Abhängigkeit von den in der ersten Einheit generierten dynamischen Variablen zu erzeugen; und
Mittel (10, 12, 35), um der zweiten Einheit (3) das erste Passwort zu übermitteln;
• wobei die zweite Einheit (3) umfasst:
zweite Generatormittel (25a, 26a, 31a), um als Antwort auf eine Zugangsanforderung, die mit Hilfe einer bestimmten der ersten Einheiten gestellt worden ist, wenigstens zwei dynamische Variablen (Nna, Ta) zu erzeugen, die eben dieser bestimmten ersten Einheit zugeordnet sind;
zweite Rechenmittel (24a), um ein zweites Passwort (Aa) mit Hilfe wenigstens eines zweiten Chiffrieralgorithmus unter Verwendung von Eingangsparametern in Abhängigkeit von den in der zweiten Einheit generierten dynamischen Variablen (Nna, Ta) zu erzeugen;
Mittel (36), um das erste und zweite Passwort zu vergleichen;
Mittel, um eine Erlaubnis für den Zugang zu der Funktion (1) zu erteilen, wenn zwischen den Passwörtern ein im Voraus festgelegter Zusammenhang besteht,
**dadurch gekennzeichnet, dass** in jeder der Einheiten:
• der erste und zweite Chiffrieralgorithmus öffentliche Algorithmen sind und wenigstens eine der dynamischen Variablen geheim ist,
• wenigstens eine der dynamischen Variablen zeitunabhängig ist, und
• die ersten und zweiten Generatormittel (25, 26, 31, 25a, 26a, 31a) dafür eingerichtet sind, dass sie ihre dynamischen Variablen im Einklang, jedoch auf unabhängige Weise erzeugen.

2. Kontrollsystem nach Anspruch 1, **dadurch gekennzeichnet, dass** die ersten und zweiten Generatormittel (25, 26, 31, 25a, 26a, 31a) dritte bzw. vierte Rechenmittel (33) umfassen, um wenigstens eine erste der dynamischen Variablen (Kn, Kna) gemäß einer Funktion zu erzeugen, die eine Anzahl von Zugangsanforderungen, die von der ersten Einheit (2) vor der laufenden Zugangsanforderung vorgebracht wurden, einbezieht.

3. Kontrollsystem nach Anspruch 2, **dadurch gekennzeichnet, dass** die dritten und vierten Rechenmittel (33) jeweils eine dynamische Zwischenvariable (Z) durch logisches Verknüpfen der Anzahl der zuvor vorgebrachten Zugangsanforderungen und des Momentanwerts der ersten dynamischen Variablen (Kn, Kna) erzeugen.

4. Kontrollsystem nach Anspruch 3, **dadurch gekennzeichnet, dass** die dritten und vierten Rechenmittel (33) mittels des dritten bzw. vierten Algorithmus' eine Chiffrierung der dynamischen Zwischenvariablen (Z) verwirklichen, wobei das Ergebnis dieser Chiffrierung einen neuen Wert (Kn+1, Kna+1) der ersten dynamischen Variablen darstellt.

5. Kontrollsystem nach Anspruch 4, **dadurch gekennzeichnet, dass** die dritten und vierten Rechenmittel (33) jeweils Mittel umfassen, um die dynamische Zwischenvariable (Z) unter Verwendung der ersten Variablen (Kn, Kna) als geheimen Chiffrierschlüssel für den dritten und vierten Algorithmus zu chiffrieren.

6. Kontrollsystem nach Anspruch 4, **dadurch gekennzeichnet, dass** die dritten und vierten Rechenmittel (33) jeweils Mittel umfassen, um die dynamische Zwischenvariable mit einem Chiffrierschlüssel (Q) zu chiffrieren, der sich von der ersten dynamischen Variablen unterscheidet und für den dritten bzw. vierten Algorithmus verwendet wird.

7. Kontrollsystem nach Anspruch 4, **dadurch gekennzeichnet, dass** die dritten und vierten Rechenmittel (33) das Ergebnis der Chiffrierung durch den dritten und vierten Chiffrieralgorithmus an die ersten bzw. zweiten Rechenmittel (24, 24a) als Chiffrierschlüssel für den ersten und zweiten Algorithmus übermitteln.

8. Kontrollsystem nach einem der Ansprüche 2 bis 7, **dadurch gekennzeichnet, dass** die ersten und zweiten Generatormittel (25, 25a) jeweils eine zweite der dynamischen Variablen in Abhängigkeit von der Anzahl der vorgebrachten Zugangsanforderungen (Nn, Nna) erzeugen und die zweite dynamische Variable den ersten bzw. zweiten Rechenmitteln (24, 24a) übermitteln, und **dadurch**, dass die ersten und zweiten Rechenmittel (24, 24a) einen Eingangsdatenwert, der die zweite dynamische Variable umfasst, mit Hilfe des ersten bzw. zweiten Chiffrieralgorithmus berechnen.

9. Kontrollsystem nach Anspruch 8, **dadurch gekennzeichnet, dass** die ersten und zweiten Generatormittel (26, 26a) jeweils eine dritte der dynamischen Variablen in Abhängigkeit von der momentanen Zeit (T, Ta) erzeugen und die dritte dynamische Variable den ersten bzw. zweiten Rechenmitteln (24, 24a) übermitteln, und **dadurch**, dass die ersten bzw. zweiten Rechenmittel (24, 24a) die dritte dynamische Variable (T, Ta) in den Eingangsdatenwert einarbeiten.

10. Kontrollsystem nach Anspruch 9, **dadurch gekennzeichnet, dass** die ersten und zweiten Rechenmittel (24, 24a) jeweils eine Verkettung der dritten Variablen und des Eingangsdatenwertes ausführen.

11. Kontrollsystem nach einem der Ansprüche 4 bis 10, **dadurch gekennzeichnet, dass** der dritte und vierte Chiffrieralgorithmus dem ersten und zweiten Chiffrieralgorithmus völlig gleich sind.

12. Kontrollsystem nach einem der Ansprüche 1 bis 11, **dadurch gekennzeichnet, dass** die ersten und zweiten Generatormittel (25, 25a, 26, 26a, 31, 31a) den ersten und zweiten Rechenmitteln (24, 24a) jeweils eine erste der dynamischen Variablen (Kn, Kna) als Chiffrierschlüssel für den ersten und zweiten Algorithmus übermitteln und einen Eingangsdatenwert (Nn, Nna) erzeugen, der eine zweite der Variablen umfasst, welche die Anzahl der von der ersten Einheit vor der laufenden Zugangsanforderung vorgebrachten Zugangsanforderungen repräsentiert, wobei der Eingangsdatenwert den ersten bzw. zweiten Rechenmitteln (24, 24a) übermittelt wird, um dort mittels der ersten dynamischen Variablen chiffriert zu werden.

13. Kontrollsystem nach Anspruch 12, **dadurch gekennzeichnet, dass** die ersten und zweiten Generatormittel (25, 26, 31, 25a, 26a, 31a) jeweils dritte und vierte Rechenmittel umfassen, um einen Chiffrierschlüssel (Kn, Kna) in Abhängigkeit von der Anzahl der vorgebrachten Zugangsanforderungen zu erzeugen.

14. Kontrollsystem nach Anspruch 13, **dadurch gekennzeichnet, dass** die dritten und vierten Rechenmittel (33) jeweils Speichermittel (28) umfassen und ausgehend von dem Momentanwert (Kn, Kna) des Chiffrierschlüssels einen neuen Wert (Kn+1, Kna+1) dieses erzeugen und den neuen Wert in den Speichermitteln (28) anstelle des Momentanwertes speichern.

15. Kontrollsystem nach einem der vorhergehenden Ansprüche, **dadurch gekennzeichnet, dass** die erste Einheit (2) Mittel (6, 38) umfasst, um Daten zu speichern, die dafür bestimmt sind, der zweiten Einheit (3) übermittelt zu werden, damit sie verwendet werden können, um von der Funktion Gebrauch zu machen, **dadurch**, dass die zweite Einheit (3) Mittel (12, 38) umfasst, um die Daten zu empfangen, und **dadurch**, dass die ersten und zweiten Generatormittel Mittel (39) umfassen, um die Daten an die ersten bzw. zweiten Rechenmittel (24, 24a) zu übermitteln, damit sie als eine Komponente wenigstens einer der zu chiffrierenden dynamischen Variablen verwendet werden können.

16. System nach einem der Ansprüche 1 bis 15, **dadurch gekennzeichnet, dass** die erste Einheit (2) in Form einer tragbaren elektronischen Vorrichtung auftritt.

17. Kontrollsystem nach Anspruch 16, **dadurch gekennzeichnet, dass** es Kommunikationsmittel (10) in der ersten und zweiten Einheit umfasst, wobei die Kommunikationsmittel eine Telefonverbindung vom Typ DTMF und/oder eine Verbindung, die mittels Infrarotstrahlen funktioniert, umfassen.

18. Kontrollsystem nach einem der Ansprüche 1 bis 15, **dadurch gekennzeichnet, dass** es einen Kartenleser umfasst, der in der zweiten Einheit (3) vorgesehen ist, und **dadurch**, dass die erste Einheit (2) in Form einer Karte auftritt, die von dem Leser gelesen werden kann, so dass der Informationsaustausch zwischen der ersten Einheit (2) und der zweiten Einheit (3) möglich ist.

19. Kontrollsystem nach einem der Ansprüche 1 bis 18, **dadurch gekennzeichnet, dass** die im Voraus festgelegte Beziehung zwischen den Passwörtern die Gleichheit ist.

20. Kontrollsystem nach Anspruch 9, **dadurch gekennzeichnet, dass** die ersten und zweiten Rechenmittel (24, 24a) jeweils die Verarbeitung der zweiten und dritten Variablen (Nn, T, Nna, Ta) sicherstellen, um den Eingangsdatenwert zu erzeugen.

21. Kontrollsystem nach einem der Ansprüche 1 bis 10, **dadurch gekennzeichnet, dass** der erste und zweite Chiffrieralgorithmus verschieden sind, jedoch eine im Voraus festgelegte Beziehung aufweisen, die sich in der Beziehung zwischen dem ersten und dem zweiten Passwort (A, Aa) widerspiegelt.

22. System zur Zugangskontrolle oder zur Authentifizierung von Personen und/oder von Nachrichten, durch welches insbesondere wenigstens einem Anwender erlaubt werden kann, Zugriff auf eine Zugangsfunktion oder Funktion zur Authentifizierung von Personen und/oder Nachrichten zu haben, mit wenigstens einer ersten, für den Anwender personalisierten Einheit und wenigstens einer zweiten Einheit zur Verifizierung, die den Zugang zu der Funktion steuern,
wobei die erste Einheit umfasst:
erste Generatormittel, um wenigstens zwei dynamische Variablen zu erzeugen;
erste Rechenmittel, um mit Hilfe wenigstens eines Chiffrieralgorithmus, der Eingangsparameter in Abhängigkeit von Variablen verwendet, ein Passwort zu erzeugen; und
Mittel, um der zweiten Einheit das Passwort zu übermitteln;
wobei die zweite Einheit umfasst:
zweite Generatormittel, um als Antwort auf eine Zugangsanforderung, die mit Hilfe einer bestimmten der ersten Einheiten gestellt ist, wenigstens zwei dynamische Variablen zu erzeugen, die eben dieser ersten bestimmten Einheit zugeordnet sind;
zweite Rechenmittel, um das Passwort mit Hilfe wenigstens eines Dechiffrieralgorithmus unter Verwendung eines Eingangsparameters in Abhängigkeit von einer ersten der dynamischen Variablen, die in der zweiten Einheit erzeugt sind, um eine dynamische Variable abzuleiten, die einer der in der ersten Einheit erzeugten dynamischen Variablen entsprechen muss, als Dechiffrierschlüssel zu dechiffrieren;
Vergleichsmittel, um die mittels der zweiten Rechenmittel abgeleitete dynamische Variable mit einer zweiten der in der zweiten Einheit erzeugen dynamischen Variablen zu vergleichen;
Mittel, die dann, wenn die Vergleichsmittel feststellen, dass zwischen der mittels der zweiten Rechenmittel abgeleiteten dynamischen Variablen und der zweiten dynamischen Variablen von den in der zweiten Einheit erzeugten dynamischen Variablen ein im Voraus festgelegter Zusammenhang besteht, eine Erlaubnis für den Zugang zu der Funktion erteilen;
**dadurch gekennzeichnet, dass**
die ersten und zweiten Generatormittel, die in der ersten bzw. zweiten Einheit vorgesehen sind, so konfiguriert sind, dass sie die dynamischen Variablen im Einklang, jedoch unabhängig voneinander liefern.
